# EUROPEAN PATENT SPECIFICATION

(11) **EP 0 335 198 B1**
(45) Date of publication and mention of the grant of the patent: **10.06.1998**
(21) Application number: 89104778.9
(22) Date of filing: 17.03.1989
(51) Int. Cl.: C08L 69/00, C08K 5/53

(54) **Ignition resistant moulded article and method for preparing the same**
Flammfester Formkörper und Verfahren zu dessen Herstellung
Article moulé résistant à l'ignition et procédé de sa préparation

(30) Priority: 31.03.1988 US 175813
(43) Date of publication of application: 04.10.1989
(73) Proprietor: THE DOW CHEMICAL COMPANY, Midland, Michigan 48674 (US)
(72) Inventor: Abotar Ogoe, Samuel, Angleton, TX 77515 (US); Huu Ho, Thoi, Lake Jackson, TX 77566 (US)
(74) Representative: Casalonga, Axel

(56) References cited:
- EP-A- 0 173 856
- EP-A- 0 269 950
- FR-A- 2 179 584
- US-A- 3 954 847
- US-A- 4 223 100

## Description

This invention relates to ignition resistant molded articles prepared from carbonate polymer compositions containing polytetrafluoroethylene (PTFE) with and without other, additives which act to reduce the susceptibility of such articles and polymers to burning or at least to minimize the effects of dripping of molten polymer when exposed to fire conditions. This invention also relates to a method for preparing such ignition resistant molded articles, and to the use of such carbonate polymer compositions for manufacturing formed parts.

Carbonate polymers derived from reactions of dihydroxy organic compounds, particularly the dihydric phenols, and carbonic acid derivatives such as phosgene, have found extensive commercial application because of their excellent physical properties. These thermoplastic polymers are suitable for the manufacture of molded parts wherein impact strength, rigidity, toughness, heat resistance, and excellent electrical properties are required.

Unfortunately, however, these polymers exhibit a brief but definite burning time when contacted with an open flame. More importantly, as is often the case, the carbonate polymers contain stabilizers and other additives which are often more combustible than the unmodified carbonate polymer. As a result, the modified carbonate polymers frequently exhibit substantially poorer resistance to combustion than do the unmodified carbonate polymers.

In attempts to increase the combustion resistance of carbonate polymers, it has been a common practice to incorporate monomeric phosphites, phosphoric acid esters, thiophosphoric acid esters containing halogenated alkyl radicals, and halogenated organic compounds into the carbonate polymer. However, in order to obtain any noticeable improvement in combustion resistance, these additives have been employed in such large quantities that they often adversely affect many of the desirable physical and mechanical properties of the carbonate polymer.

In U.S. Patent No. 4,626,563 fire retardant polycarbonates comprising metal salts of sulfimides, chlorinated or brominated aromatic compounds, metal salts of inorganic acids, bisphenol polycarbonates and fibril-forming polytetrafluoroethylene (PTFE) are disclosed and claimed. Control 2 therein shows that the addition of 0.5 percent of a fibril-forming polytetrafluoroethylene to the heat stabilized polycarbonate only gave a UL-94 Flammability Test rating of V-2 (1/16" (1.6 mm) thickness). This is apparently due to the use of more severe extrusion and molding temperatures (302°C) which destroys the ability of polytetrafluoroethylene to contract upon exposure to the flame and thus the anti-drip characteristic is lost.

U.S. Patent No. 4,223,100 shows in Table II, Composition 20, a 0.5 percent PTFE/polycarbonate composition that has a UL-94 (1/8" (3.2 mm) thickness) rating of V₁-V₀ and fails the UL-94 test at the 1/16" (1.6 mm) thickness. Again this is believed to be due to the 300°C molding temperature.

U.S. Patent No. 4,110,299 shows in the Table a 0.1 percent PTFE/polycarbonate composition that fails the UL-94 test due to the 315°C molding temperature and also low PTFE concentration. Following is a description of the UL-94 Flammability Tests.

### UL-94 Flammability Tests

Substance samples are shaped to bars with the dimensions 127 x 12.7 x 1.6 mm. The bars are mounted vertically so that the underside of the test piece is 305 mm above a strip of bandage material. Each test bar is ignited individually by means of two successive ignition operations lasting 10 seconds, the burning characteristics are observed after each ignition operation and the sample is then evaluated. A Bunsen burner with a blue flame, 10 mm high, of natural gas with a thermal unit of 3.73 x 104 kJ/m³ is used for igniting sample.

The polycarbonate moulding compositions in class UL-94 V-0 contain no samples which burn for longer than 10 seconds after each action of the test flame; they show no total flaming time of more than 50 seconds when the flame acts twice on each set of samples; they contain no samples which burn completely up to the holding clamp attached to the upper end of the sample; they contain no samples which ignite the cotton-wool arranged underneath the sample by burning drips or particles; they also contain no samples which glow for longer than 30 seconds after removal of the test flame.

The following criteria are decisive for classification:

| _{"94V-2"} | |
|---|---|
| Average after burning time | ≤25 seconds |
| Maximal acceptable after-burning time after any one flame application. The material may drip off burning. | ≤30 seconds |

### "94V-1"

After burning times correspond to those of "94V-2" but material may not drip off burning.

| "94V-0" | |
|---|---|
| Average after burning time | ≤5 seconds |
| Maximal acceptable after-burning time. The material may drip off burning. | 10 seconds |

The present invention is an ignition resistant molded article prepared from a thermoplastic carbonate polymer composition comprising a carbonate polymer and such composition having a UL-94 (1/16" (1.6 mm)) rating V-0, such composition consisting of:
(A) an amount of a fibril forming, polytetrafluoroethylene having high elastic memory properties providing a heat shrinkage equal to or greater than 15 percent as measured as a 0.5 weight percent concentration of the polytetrafluoroethylene in the polycarbonate component forming the remainder of the thermoplastic carbonate polymer composition and as described in the description under the heading "Testing Procedure" whereby the amount of polytetrafluoroethylene used is selected to meet said V-0 rating;
(B) optionally from 0.005 to 1.0 percent by weight of one or more organophosphorous compounds represented by the formulae:

   P(OR)₂-OR,

   R-P(OR)-OR,

   RO-P(OR)-R₁-P(OR)-OR,

   R-P(R)-OR,

   or

   P(R)₃

   wherein R is independently unsubstituted or substitued aryl, alkyl, cycloalkyl, aralkyl, or alkaryl radicals containing one or more carbon atoms, and R₁ is a 4,4'biphenyl radical;
(C) optionally fillers (i.e. glass fibers), pigments, dyes, antioxidants, heat stabilizers, ultraviolet light absorbers and mould release agents;
(D) the remainder being a carbonate polymer having a melt flow rate from 1 to 90 grams / 10 minutes as measured by ASTM D-1238, condition O (300 degrees C, 1.2 kg load) and
such composition obtainable by extrusion (if necessary) and molding at suitably low temperatures (from 200° to 330° C) to retain said elastic memory properties of the polytetrafluoroethylene.

The invention further relates to a method for preparing an ignition resistant molded article prepared from a thermoplastic carbonate polymer composition having a UL-94 (1/16" (1.6 mm)) rating of V-0 comprising the steps of:
(A) preparing a composition consisting of (**a**) a carbonate polymer having a melt flow rate from 1 to 90 / 10 minutes as measured by ASTM D-1238, condition O (300 degrees C, 1.2 kg load) and (**b**) an amount of a fibril forming, high elastic memory polytetrafluoroethylene which provides a heat shrinkage equal to or greater than 15 percent as measured as a 0.5 weight percent concentration of the polytetrafluoroethylene in the carbonate polymer and as described in the description in the description under the heading "Testing Procedure" whereby the amount of polytetrafluoroethylene used is selected to meet said V-0 rating, (**c**) optionally from 0.005 to 1.0 percent by weight of one or more organophosphorous compounds represented by the formulae:

   P(OR)₂-OR,

   R-P(OR)-OR,

   RO-P(OR)-R₁-P(OR)-OR,

   R-P(R)-OR,

   or

   P(R)₃

   wherein R is independently unsubstituted or substituted aryl, alkyl, cycloalkyl, aralkyl, or alkaryl radicals containing one or more carbon atoms, and R₁ is a 4,4' biphenyl radical, and (**d**) fillers (i.e. glass fibers), pigments, dyes, antioxidants, heat stabilizers, ultraviolet light absorbers and mould release agents;
(B) extruding the composition, if extrusion mixing is necessary, at a temperature of from 200° C to 330° C, and
(C) molding said mixture at a temperature of from 200° C to 330° C.

It has been surprisingly discovered that contrary to the teachings of the prior art, the incorporation of halogenated compounds and alkali metal salts into carbonate polymers is not needed to produce a UL-94 (1/16" (1.6 mm)) V-0 rating. It is well known that the use of these halogenated compounds and alkali metal salts contribute to the relatively poor hydrolytic stability, color stability, UV stability and heat distortion performance of carbonate polymers containing them. Thus, the compositions employed in this invention have a unique advantage over the prior art.

The ignition resistant carbonate polymer compositions employed in the present invention and the molded article prepared therefrom exhibit surprisingly high resistance to combustion and/or ignition and are suitably employed in most applications in which polycarbonates have been previously utilized. Applications of particular interest for the utilization of the said carbonate polymer compositions of this invention are pigmented and/or colored carbonate polymers useful as automobile parts, e.g., air filters, fan housings, exterior components, housings for electrical motors, appliances, business and office equipment, photographic equipment, and aircraft applications.

The carbonate polymers employed in the present invention are advantageously aromatic carbonate polymers such as the trityl diol carbonates described in U.S. Patent Nos. 3,036,036; 3,036,037; 3,036,038 and 3,036,039; polycarbonates of bis(ar-hydroxyphenyl)-alkylidenes (often called bisphenol-A type diols), including their aromatically and aliphatically substituted derivatives such as those disclosed in U.S. Patent Nos. 2,999,835; 3,038,365, 3,334,154, and 4,299,928; and carbonate polymers derived from other aromatic diols such as those described in U.S. Patent No. 3,169,121.

It is understood, of course, that the carbonate polymer may be derived from (1) two or more different dihydric phenols or (2) one or more dihydric phenols and one or more hydroxy- or acid-terminated reactants such as dicarboxylic acids, or alkylene glycols in the event a carbonate copolymer or interpolymer rather than a homopolymer is desired. Also suitable for the practice of this invention are blends of any one of the above carbonate polymers. Also included in the term "carbonate polymer" are the ester/carbonate copolymers of the types described in U.S. Patent Nos. 3,169,121; 4,287,787; 4,156,069; 4,260,731 and 4,105,633. Of the aforementioned carbonate polymers, the polycarbonates of bisphenol-A and derivatives, including copolycarbonates of bisphenol-A, are preferred. Methods for preparing carbonate polymers for use in the practice of this invention are well known; for example, several suitable methods are disclosed in the aforementioned patents.

Suitable polytetrafluoroethylene polymers for use in this invention are those adapted to form a fibril structure to stabilize the polymer under molten conditions. Such polymers are generally disclosed by U.S. Patents 3,005,795, 3,671,487 and 4,463,130. In addition, the polytetrafluoroethylene (PTFE) polymers must have a high elastic memory and/or provide a heat shrinkage equal to or greater than 15 percent when tested under the following testing procedure.

### Testing Procedure

A polycarbonate resin (having a melt flow rate from 1 to 90 grams/10 minutes as measured by ASTM D-1238, condition O (300 degrees C, 1.2 kg load)) with 0.5 percent of PTFE is injection molded into bars having the dimensions of 5"x 1/2"x 1/16" (127 mm x 12.7 mm x 1.6 mm) and heated at 160°C for 1 hour. The shrinkage is measured and compared to the length of the sample before and after heating. A 75 ton (75000 kg) Newbury molding machine is used. The molding conditions are:

| | |
|---|---|
| Barrel Temperature | 250°C |
| Mold Temperature | 65°C |
| Screw Speed | 150 rpm |
| Pressure | 1000 psi (6,895 kPa) |

The results of several tests conducted in accordance with the above procedure are shown in Table 1.

**Table 1**

| Relationship Between the Shrinkage and UL-94 for Different Polytetrafluoroethylenes (PTFE) | | | |
|---|---|---|---|
| Run | PTFE* | % Shrinkage | UL-94 at 1/16" *(1.6 mm) |
| 1 | 8 | 1 | V-2 |
| 2 | DXL-6000 | 1 | V-2 |
| 3 | 6C | 25 | V-0 |
| 4 | 60 | 25 | V-0 |
| 5** | 6C | 8 | V-2 |
| 6** | 60 | 6 | V-2 |
| 7 | 64 | 15 | V-0 |
| 8 | 6CN | 24 | V-0 |
| 9 | 65 | 22 | V-0 |
| 10 | 67 | 22 | V-0 |

| | | | |
|---|---|---|---|
| * Various grades of Teflon™ from Du Pont | | | |
| ** Molding temperature 325°C | | | |

Table 1 shows that only high elastic memory PTFE is effective as an ignition resistant (IR) additive. The high elastic memory PTFE helps the polycarbonate sample contract upon exposure to a flame source and thus imparts ignition resistance to the polycarbonate. The relationship between the percent shrinkage and the UL-94 test is also shown in Table 1. The PTFE that gives a polycarbonate shrinkage greater than 15 percent is effective as an IR additive. Teflon™ 6C, 60, 64, 6CN, 65, and 67 shown in Table 1 are some examples of PTFE that have high elastic memory. Teflon™ DXL-6000 and Teflon™ 8 are PTFE that have a low percent of shrinkage and did not impart ignition resistance to the polycarbonate. Note, that if the molding temperature is higher than the melting point of PTFE the elastic memory of PTFE is significantly reduced.

The compositions of this invention advantageously employ an organo phosphorous compound to aid in preventing polymer degradation under molding conditions and increasing the ignition resistance. Suitable organo phosphorous compounds are those represented by the formulae:

P(OR)₂-OR,

R-P(OR)-OR,

RO-P(OR)-R₁-P(OR)-OR,

R-P(R)-OR,

or

P(R)₃

wherein R is independently unsubstituted or substituted aryl, alkyl, cycloalkyl, aralkyl, or alkaryl radicals containing one or more carbon atoms and R₁ is a 4,4'biphenyl radical. The preferred organo phosphorous compound is tetrakis (2,4-di-t-butylphenyl) biphenylene diphosphonite. Suitable organo phosphorus compounds are disclosed in U.S. Patent No. 4,088,709.

The carbonate polymer compositions employed in the present invention are suitably prepared by combining the ingredients in effective amounts using any of a variety of blending procedures conventionally employed for polymer blends. For example, dry particulates of the carbonate polymer, and the other additives can be dry blended and the resulting dry blend extruded into the desired shape.

The amount of the high elastic memory polytetrafluorethylene is preferably in the range of from 0.01 to 10 percent and preferably in the range of from 0.1 to 5 percent by weight based on total composition weight. However, it is to be understood that greater or lesser amounts can be used under various conditions such as the type of polytetrafluorethylene used, the process temperatures, and the melt flow rate or molecular weight of the carbonate polymers used. This is illustrated by Tables 1, 4, and 5 hereinafter.

Where employed, the additional organophosphorous compounds are suitably present in sufficient amounts to stabilize the polymer in the melt, i.e., lack of color formation or molecular weight degradation under molding conditions, and melt stability. The amounts are from 0.005 to 1, in particular from 0.01 to 1.0 percent by weight of organophosphorous compounds.

In addition, other additives can be included in the carbonate polymer composition employed in the present invention such as fillers (i.e., glass fibers), pigments, dyes, antioxidants, heat stabilizers, ultraviolet light absorbers and mold release agents.

The melt flow rate of the polycarbonate resins were measured according to ASTM D-1238, condition O.

The following examples are given to further illustrate the invention and should not be construed as limiting its scope. In the following examples, all parts and percentages are by weight unless otherwise indicated.

### EXAMPLE 1

An ignition resistant polycarbonate having a melt flow rate of 15 gm/10 minute was prepared by adding 0.3 percent of a commercially available polytetrafluoroethylene (Teflon™ 6C from Du Pont) to polycarbonate pellets (Calibre™ 300-15 a trademark of the Dow Chemical Company). The additive and polycarbonate pellets were blended in a Lightnin™ blender from Mixing Equipment Co., Inc. for 1 minute with agitation. The resultant blended materials were fed to a 30 mm twin screw extruder having a 250°C barrel temperature. The extruded pellets were dried in an oven for 3 hours at 125°C. The dried pellets were molded into 5"x1/2"x1/16" (127 mm x 12.7 mm x 1.6 mm) bars at 250°C for flammability tests. The test results are shown in Table 2.

### CONTROL A

The procedure for Example 1 was repeated omitting the Teflon™ 6C.

### EXAMPLE 2

The procedure for Example 1 was repeated using 0.5 percent Teflon™ 6C from Du Pont.

### EXAMPLE 3

The procedure for example 1 was repeated using 0.3 percent Teflon™ 6CN.

### EXAMPLE 4

The procedure for Example 1 was repeated using 0.05 percent tetrakis (2,4-di-t-butylphenyl) biphenylene diphosphonite (PEPQ).

### EXAMPLE 5

The procedure for Example 1 was repeated using 0.05 percent PEPQ and 0.5 percent Teflon™ 6C.

### EXAMPLE 6

The procedure for Example 1 was repeated using 0.5 percent Teflon™ 6C and 40 MFR base polycarbonate.

### Control B

The procedure for Example 1 was repeated using 40 MFR base polycarbonate and no Teflon™.

### EXAMPLE 7

The procedure for Example 1 was repeated ising 40 MFR base polycarbonate, 0.5 percent Teflon™ 6C, 0.05 percent PEPQ, and 1 percent TiO₂.

### Control C

The procedure for Example 1 was repeated using 80 MFR base polycarbonate and no Teflon™ 6C.

### EXAMPLE 8

The procedure for Example 1 was repeated using 80 MFR polycarbonate, 0.3 percent Teflon™ 6C, and 0.05 percent PEPQ.

### EXAMPLE 9

The procedure for Example 1 was repeated using 80 MFR polycarbonate, 0.5 percent Teflon™ 6C, and 0.05 percent PEPQ.

### Runs 1-4, and 7-10

The procedure for Example 1 was repeated using different kinds of polytetrafluoroethylene as described in Table 1. The amount of polytetrafluoroethylene was 0.5 percent.

### Run 5

The procedure for Example 1 was repeated using 0.5 percent of Teflon™ 6C and molding at 325°C.

### Run 6

The procedure for Example 1 was repeated using 0.5 percent of Teflon™ 60 and molding temperature at 325°C

### Runs 11-14

The procedure for Example 1 was repeated using 40 MFR polycarbonate, 0.5 percent Teflon™ 6C and different molding temperatures as described in Table 4.

### Runs 15-22

The procedure for Example 1 was repeated using different amounts of Teflon™ 6C as described in Table 5.

### Runs 23-24

The procedure for Example 1 was repeated using 0.5 and 2.0 percent of Teflon™ 6C, a molding temperature of 315°C,and a polycarbonate having a melt flow rate of 3. The results are set forth in Table 6.

### Runs 25-26

The procedure for Example 1 was repeated using 0.5 and 2.0 percent of Teflon™ 6C, a molding temperature of 300°C,and a polycarbonate having a melt flow rate of 6.6. The results are set forth in Table 6.

**Table 2**

| Ignition Resistance for 15 MFR Resin | | | |
|---|---|---|---|
| Sample | UL-94 Test 1/16" (1.6 mm) Avg Time (sec.) | Number of Drips | Rating |
| Control A 15 MFR base polymer | 10.5 | 5/5 | V-2 |
| | | | |
| Ex. 1 Control A + 0.3% Teflon 6C | 3.5 | 0/5 | V-0 |
| | | | |
| Ex. 2 Control A + 0.5% Teflon 6C | 2.5 | 0/5 | V-0 |
| | | | |
| Ex. 3 Control A + 0.3% Teflon 6CN | 4.0 | 0/5 | V-0 |
| | | | |
| Ex. 4 Control A + 0.3% Teflon 6C + 0.05% PEPQ | 1.5 | 0/5 | V-0 |
| | | | |
| Ex. 5 Control A + 0.5% Teflon 6C + 0.05% PEPQ | 1.1 | 0/5 | V-0 |

Table 2 shows that the high elastic memory polytetrafluoroethylene (PTFE) such as Teflon™ 6C, Teflon™ 6CN from Du Pont improved the ignition resistance of PC. The PC sample with PTFE gave V-0 down to 1/16" (1.6 mm) in UL-94 test. The addition of PEPQ, a heat stabilizer, improved the burn time.

**Table 3**

| Ignition Resistance for 40 MFR and 80 MFR Resins | | | |
|---|---|---|---|
| Sample | UL-94 Test 1/16" (1.6 mm) Avg Time (sec.) | Number of Drips | Rating |
| Control B (40 MFR base polymer) | 8.0 | 5/5 | V-2 |
| | | | |
| Ex. 6 Control B + 0.5% Teflon 6C | 4.0 | 0/5 | V-0 |
| | | | |
| Ex. 7 Control B + 0.5% Teflon 6C 0.05% PEPQ + 1% TiO₂ | 2.0 | 0/5 | V-0 |
| | | | |
| Control C (80 MFR base polymer) | 5.0 | 5/5 | V-2 |
| | | | |
| Ex. 8 Control C + 0.3% Teflon 6C + 0.05% PEPQ | 1.8 | 0/5 | V-0 |
| | | | |
| Ex. 9 Control C + 0.5% Teflon 6C + 0.05% PEPQ | 1.0 | 0/5 | V-0 |

Table 3 shows that a high elastic memory PTFE also is effective for high melt flow rate polycarbonates. Ex. 7 shows that heat stabilizers and pigments can also be used without sacrificing ignition resistance properties.

**Table 4**

| Effect of Barrel Temperature on Ignition Resistance of Polycarbonates | | | | |
|---|---|---|---|---|
| | Barrel Temperature | UL-94 test, 1/16" (1.6 mm) | | |
| Run | (°C) | Avg time (sec.) | Number of Drips | Rating |
| 11 | 250 | 0.7 | 0/5 | V-0 |
| 12 | 275 | 1.9 | 0/5 | V-0 |
| 13 | 300 | 1.4 | 0/5 | V-0 |
| 14 | 325 | 5.9 | 5/5 | V-2 |

The results in Table 4 show that the molding temperature had significant effects on the ignition resistance. When the sample was molded higher than 325°C, the melting point of PTFE, the PTFE lost its elastic memory and the sample was no longer ignition resistant.

**Table 5**

| Effect of the Polytetrafluoroethylene (PTFE) Amount on the Shrinkage and Ignition Resistance of Polycarbonates | | | |
|---|---|---|---|
| Run | Amount of PTFE (Teflon™ 6C) | % Shrinkage | UL-94 at 1/16" (1.6 mm) |
| 15 | 0.1 | 5 | V-2 |
| 16 | 0.2 | 8 | V-2 |
| 17 | 0.3 | 15 | V-0 |
| 18 | 0.5 | 25 | V-0 |
| 19 | 0.9 | 43 | V-0 |
| 20 | 2.0 | 50 | V-0 |
| 21 | 4.0 | 59 | V-0 |
| 22 | 8.0 | 56 | V-0 |

The polycarbonate used in this study had a MFR of 15. The molding temperature and extrusion temperature was 250°C. Table 5 shows that the percent shrinkage and IR properties increased with increasing amount of PTFE.

**Table 6**

| Ignition Resistant Low Melt Flow Rate Polycarbonate | | | | |
|---|---|---|---|---|
| Run | Molding Temperature (°C) | PC MFR | Amount of PTFE | UL-94 Test 1/16" (1.6 mm) Rating |
| 23 | 315 | 3 | 0.5 | HB |
| 24 | 315 | 3 | 2.0 | V-0 |
| 25 | 300 | 6.6 | 0.5 | V-2 |
| 26 | 300 | 6.6 | 2.0 | V-0 |
| PC MFR = polycarbonate melt flow rate | | | | |
| PTFE = polytetrafluoroethylene | | | | |

Table 6 shows that ignition resistant polycarbonate (V-0 at 1/16" (1.6 mm)) with low melt flow rate can be prepared with the addition of high elastic memory PTFE. However, since a low melt flow rate requires high processing temperatures, a high amount of PTFE was needed.

U.S. Patents 4,110,299, 4,223,100, 4,626,563 taught that the composition of 0.1-0.5 percent of PTFE with polycarbonate fails the UL-94 test at 1/16" (1.6 mm) thickness. The results in Table 6 indicate that by increasing the amount of PTFE the polycarbonate having UL-94 rating of V-0 at 1/16" (1.6 mm) can be prepared.

We have demonstrated that the high elastic memory of PTFE, i.e. the ability to contract or shrink polycarbonate, gives the ignition resistant properties to polycarbonate. The elastic memory is dependent on the type of PTFE (Table 1), the amount of PTFE (Table 5), the processing conditions (Table 4), and the melt flow rate of the polycarbonate. By selecting the above proper conditions, an ignition resistant polycarbonate having a UL-94 rating of V-0 at 1/16" (1.6 mm) can be obtained.

## Claims

1. An ignition resistant molded article prepared from a thermoplastic carbonate polymer composition comprising a carbonate polymer and such composition having a UL-94 (1/16" (1.6 mm)) rating V-0 such composition consisting of:
(A) an amount of a fibril forming, polytetrafluoroethylene having high elastic memory properties providing a heat shrinkage equal to or greater than 15 percent as measured as a 0.5 weight percent concentration of the polytetrafluoroethylene in the polycarbonate component forming the remainder of the thermoplastic carbonate polymer composition and as described in the description under the heating "Testing Procedure", whereby the amount of polytetrafluoroethylene used is selected to meet said V-0 rating;
(B) optionally from 0.005 to 1.0 percent by weight of one or more organophosphorous compounds represented by the formulae:
P(OR)₂-OR,
R-P(OR)-OR,
RO-P(OR)-R₁ -P(OR)-OR,
R-P(R)-OR,
or
P(R)₃
wherein R is independently unsubstituted or substitued aryl, alkyl, cycloalkyl, aralkyl, or alkaryl radicals containing one or more carbon atoms, and R₁ is a 4,4' biphenyl radical;
(C) optionally fillers (i.e. glass fibers), pigments, dyes, antioxidants, heat stabilizers, ultraviolet light absorbers and mould release agents ; and
(D) the remainder being a carbonate polymer having a melt flow rate from 1 to 90 grams / 10 minutes as measured by ASTM D-1238, condition O (300 degrees C, 1.2 kg load) and
such composition obtainable by extrusion (if necessary) and molding at suitably low temperatures (from 200° to 330° C) to retain said elastic memory properties of the polytetrafluoroethylene.

2. An ignition resistant molded article as claimed in Claim 1 wherein the amount of said polytetrafluoroethylene is from 0.1 to 10.0 percent by weight and the amount of said carbonate polymer is from 99.9 to 90.0 percent by weight.

3. A molded article as claimed in Claim 1 wherein the melt flow rate is from 22 to 85 grams/10 minutes.

4. A molded article as claimed in Claim 1 wherein the one or more organo phosphorous compounds are present in an amount ranging from 0.01 to 1.0 % by weight.

5. A molded article as claimed in Claim 4 wherein the organo phosphorous compound has the formula
RO-P(OR)-R₁-P(OR)-OR
wherein R is independently unsubstituted or substituted aryl, alkyl, cycloalkyl, aralkyl, or alkaryl radicals containing one or more carbon atoms and R₁ is a 4,4'biphenyl radical.

6. A molded article as claimed in Claim 5 wherein the organo phosphorous compound is tetrakis (2,4-di-t-butylphenyl) biphenylene diphosphonite.

7. A method for preparing an ignition resistant molded article prepared from a thermoplastic carbonate polymer composition having a UL-94 (1/16" (1.6 mm)) rating of V-0 comprising the steps of:
(A) preparing a composition consisting of (**a**) a carbonate polymer having a melt flow rate from 1 to 90 grams / 10 minutes as measured by ASTM D-1238, condition O (300 degrees C, 1.2 kg load) and (**b**) an amount of a fibril forming, high elastic memory polytetrafluoroethylene which provides a heat shrinkage equal to or greater than 15 percent as measured as a 0.5 weight percent concentration of the polytetrafluoroethylene in the carbonate polymer and as described in the description under the heating "Testing Procedure" whereby the amount of polytetrafluoroethylene used is selected to meet said V-0 rating, (**c**) optionally from 0.005 to 1.0 percent by weight of one or more organophosphorous compounds represented by the formulae:
P(OR)₂-OR,
R-P(OR)-OR,
RO-P(OR)-R₁ -P(OR)-OR,
R-P(R)-OR,
or
P(R)₃
wherein R is independently unsubstituted or substituted aryl, alkyl, cycloalkyl, aralkyl, or alkaryl radicals containing one or more carbon atoms, and R₁ is a 4,4' biphenyl radical, and (**d**) optionally fillers (i.e. glass fibers), pigments, dyes, antioxidants, heat stabilizers, ultraviolet light absorbers and mould release agents ;
(B) extruding the composition, if extrusion mixing is necessary, at a temperature of from 200° C to 330° C, and
(C) molding said mixture at a temperature of from 200° C to 330° C.

8. A method as claimed in Claim 7 wherein the temperature is in the range of from 240°C to 315°C.

9. A method as claimed in Claim 7 wherein the amount of said polytetrafluoroethylene is from 0.1 to 5.0 percent by weight.

10. A method as claimed in Claim 8 or 9 wherein the one or more organo phosphorous compounds are present in an amount ranging from 0.01 to 1.0 % by weight.

11. Use of a composition as defined in claim 1 or 7 for manufacturing formed parts having increased resistance to combustion and/or ignition, compared with a composition which does not contain part (A) of claim 1.

## Patentansprüche

1. Flammfester Formkörper, hergestellt aus einer ein Carbonatpolymeres umfassenden thermoplastischen Carbonatpolymerzusammensetzung und wobei diese Zusammensetzung eine UL-94-Einstufung (1/16"(1,6 mm)) V-0 besitzt, wobei diese Zusammensetzung besteht aus:
(A) einer Menge eines fibrillenbildenden Polytetrafluorethylens, das die Eigenschaft eines hohen Rückstellbestrebens besitzt, was eine Hitzeschrumpfung gleich oder größer 15 % ergibt, gemessen als eine Konzentration von 0,5 Gew.-% des Polytetrafluorethylens in der Polycarbonatkomponente, welche den Rest der thermoplastischen Polycarbonatpolymerzusammensetzung bildet, und wie in der Beschreibung unter dem Abschnitt "Testverfahren" beschrieben, wobei die Menge des eingesetzten Polytetrafluorethylens so ausgewählt ist, um diese Einstufung V-O zu erfüllen;
(B) wahlweise von 0,005 bis 1,0 Gew.-% einer oder mehrerer Organophosphorverbindungen, wiedergegeben durch die Formeln:
P(OR)₂-OR,
R-P(OR)-OR,
RO-P(OR)-R₁-P(OR)-OR,
R-P(R)-OR
oder
P(R)₃
worin R unabhängig voneinander nichtsubstituierte oder substituierte Aryl-, Alkyl-, Cycloalkyl-, Aralkyl- oder Alkarylreste mit einem oder mehreren Kohlenstoffatomen ist und R₁ ein 4,4'-Biphenylrest ist;
(C) wahlweise Füllstoffen (d. h. Glasfasern), Pigmenten, Farbstoffen, Antioxidantien, Hitzpstabilisatoren, UV-Absorbern und Formtrennmitteln, und
(D) wobei der Rest ein Carbonatpolymeres ist, das eine Schmelzflußrate von 1 bis 90 Gramm/10 Minuten, gemessen nach ASTM D-1238, Bedingung O (300° C, Belastung 1,2 kg), hat, und
wobei eine solche Zusammensetzung erhältlich ist durch Extrusion (falls erforderlich) und Formen bei geeignet niedrigen Temperaturen (von 200° bis 330° C) zur Beibehaltung der Eigenschaften des Rückstellbestrebens des Polytetrafluorethylens.

2. Flammfester Formkörper nach Anspruch 1, worin die Menge dieses Polytetrafluorethylens von 0,1 bis 10,0 Gew.-% beträgt und die Menge dieses Carbonatpolymeren von 99,9 bis 90,0 Gew-% beträgt.

3. Formkörper nach Anspruch 1, worin die Schmelzflußrate von 22 bis 85 Gramm/10 Minuten ist.

4. Formkörper nach Anspruch 1, worin die eine oder mehrere Organophosphorverbindung/en in einer Menge im Bereich von 0,01 bis 1,0 Gew.-% vorhanden sind.

5. Formkörper nach Anspruch 4, worin die Organophosphorverbindung die Formel hat:
RO-P(OR)-R₁P(OR)-OR
worin R unabhängig voneinander nichtsubstituierte oder substituierte Aryl-, Alkyl-, Cycloalkyl-, Aralkyl- oder Alkarylreste mit einem oder mehreren Kohlenstoffatomen ist und R₁ ein 4,4'-Biphenylrest ist.

6. Formkörper nach Anspruch 5, worin die Organophosphorverbindung Tetrakis-(2,4-di-t-butylphenyl)-biphenylendiphosphonit ist.

7. Verfahren zur Herstellung eines flammfesten Formkörpers, hergestellt aus einer thermoplastischen Carbonatpolymerzusammensetzung, die eine UL-94-Einstufung (1/16"(1,6 mm)) V-0 besitzt,
umfassend die Stufen von:
(A) Herstellen einer Zusammensetzung bestehend aus (a) einem Carbonatpolymeren mit einer Schmelzflußrate von 1 bis 90 Gramm/10 Minuten, gemessen nach ASTM D-1238, Bedingung O (300° C, 1,2 kg Belastung) und (b) einer Menge eines fibrillenbildenden Polytetrafluorethylens mit hohem Rückstellbestreben, das eine Hitzeschrumpfung gleich oder größer 15 % ergibt, gemessen als eine Konzentration von 0,5 Gew.-% des Polytetrafluorethylens in dem Polycarbonat und wie in der Beschreibung unter dem Abschnitt "Testverfahren" beschrieben, wobei die Menge des eingesetzten Polytetrafluorethylens so ausgewählt ist, um diese Einstufung V-0 zu erfüllen, und (c) wahlweise von 0,005 bis 1,0 Gew.-% einer oder mehrerer Organophosphorverbindungen, wiedergegeben durch die Formeln:
P(OR)₂-OR,
R-P(OR)-OR,
RO-P(OR)-R₁-P(OR)-OR,
R-P(R)-OR
oder
P(R)₃
worin R unabhängig voneinander nichtsubstituierte oder substituierte Aryl-, Alkyl-, Cycloalkyl-, Aralkyl- oder Alkarylreste mit einem oder mehreren Kohlenstoffatomen ist und R₁ ein 4,4'-Biphenylrest ist, und (d) wahlweise Füllstoffen (d. h. Glasfasern), Pigmenten, Farbstoffen, Antioxidantien, Hitzestabilisatoren, UV-Absorbern und Formtrennmitteln;
(B) Extrudieren der Zusammensetzung, falls Extrusionsmischen erforderlich ist, bei einer Temperatur von 200° C bis 330° C, und
(C) Verformen dieser Mischung bei einer Temperatur von 200° C bis 330° C.

8. Verfahren nach Anspruch 7, worin die Temperatur im Bereich von 240° C bis 315° C liegt.

9. Verfahren nach Anspruch 7, worin die Menge dieses Polytetrafluorethylens von 0,1 bis 5,0 Gew.-% beträgt.

10. Verfahren nach Anspruch 8 oder 9, worin die eine oder mehrere Organophosphorverbindung/en in einer Menge im Bereich von 0,01 bis 1,0 Gew.-% vorhanden sind.

11. Verwendung einer Zusammensetzung, wie in Anspruch 1 oder 7 definiert, zur Herstellung von Formteilen mit erhöhter Beständigkeit gegenüber Verbrennen oder Entflammen, verglichen mit einer Zusammensetzung, welche den Anteil (A) von Anspruch 1 nicht enthält.

## Revendications

1. Article moulé résistant à l'inflammation, fabriqué à partir d'une composition de polycarbonate thermoplastique contenant un polycarbonate, cette composition obtenant le classement V-0 (test UL-94, éprouvette de 1,6 mm (1/16 pouce)) et comprenant :
A) une certaine quantité de polytétrafluoroéthylène formant des fibrilles, possédant de bonnes propriétés de mémoire élastique et assurant un retrait supérieur ou égal à 15 % sous l'action de la chaleur (retrait mesuré de la façon indiquée dans la description, dans le paragraphe "Protocole d'essai"), pour une concentration de 0,5 % en poids de polytétrafluoroéthylène dans le composant polycarbonate constituant le reste de la composition de polycarbonate thermoplastique, la quantité employée de polytétrafluoroéthylène étant choisie de façon que soit respecté ledit classement V-0,
B) éventuellement, de 0,005 à 1,0 % en poids d'un ou plusieurs composés organophosphorés représentés par les formules
P(OR)₂-OR
R-P(OR)-OR
RO-P(OR)-R₁-P(OR)-OR
R-P(R)-OR
et
P(R)₃
dans lesquelles R représente, indépendamment dans chaque cas, un groupe aryle, alkyle, cycloalkyle, aralkyle ou alkaryle portant ou non des substituants et comportant un ou plusieurs atomes de carbone, et R₁ représente un groupe 4,4'-biphénylène, et
C) éventuellement, des charges (par exemple des fibres de verre), des pigments, des colorants, des antioxydants, des agents thermostabilisants, des absorbeurs UV et des agents de démoulage,
D) le reste étant constitué par un polycarbonate dont l'indice de fluidité à chaud, mesuré selon la norme ASTM D-1238 (conditions O, soit à 300 °C sous une charge de 1,2 kg) vaut de 1 à 90 grammes par 10 minutes,
cette composition pouvant être obtenue par extrusion, si nécessaire, et moulage à des températures suffisamment basses, soit de 200 à 330 °C, pour que soient conservées lesdites propriétés de mémoire élastique du polytétrafluoroéthylène.

2. Article moulé résistant à l'inflammation, conforme à la revendication 1, dans lequel la proportion dudit polytétrafluoroéthylène vaut de 0,1 à 10,0 % en poids et la proportion dudit polycarbonate vaut de 99,9 à 90,0 % en poids.

3. Article moulé, conforme à la revendication 1, dans lequel ledit indice de fluidité à chaud vaut de 22 à 85 grammes par 10 minutes.

4. Article moulé, conforme à la revendication 1, dans lequel le ou les composés organophosphorés se trouvent en une proportion de 0,01 à 1,0 % en poids.

5. Article moulé, conforme à la revendication 4, dans lequel le composé organophosphoré possède la formule
RO-P(OR)-R₁-P(OR)-OR
dans laquelle R représente, indépendamment dans chaque cas, un groupe aryle, alkyle, cycloalkyle, aralkyle ou alkaryle portant ou non des substituants et comportant un ou plusieurs atomes de carbone, et R₁ représente un groupe 4,4'-biphénylène.

6. Article moulé, conforme à la revendication 5, dans lequel le composé organophosphoré est du biphénylène-diphosphonite de tétrakis(2,4-di-t-butyl-phényle).

7. Procédé de fabrication d'un article moulé résistant à l'inflammation, fabriqué à partir d'une composition de polycarbonate thermoplastique qui obtient le classement V-0 (test UL-94, éprouvette de 1,6 mm (1/16 pouce)), ce procédé comprenant les étapes consistant à :
A) préparer une composition comprenant
a) un polycarbonate dont l'indice de fluidité à chaud, mesuré selon la norme ASTM D-1238 (conditions O, soit à 300 °C sous une charge de 1,2 kg) vaut de 1 à 90 grammes par 10 minutes, et
b) une certaine quantité de polytétrafluoroéthylène formant des fibrilles, possédant de bonnes propriétés de mémoire élastique et assurant un retrait supérieur ou égal à 15 % sous l'action de la chaleur (retrait mesuré de la façon indiquée dans la description, dans le paragraphe "Protocole d'essai") pour une concentration de 0,5 % en poids de polytétrafluoroéthylène dans le polycarbonate, la quantité employée de polytétrafluoroéthylène étant choisie de façon que soit respecté ledit classement V-0,
c) éventuellement, de 0,005 à 1,0 % en poids d'un ou plusieurs composés organophosphorés représentés par les formules
P(OR)₂-OR
R-P(OR)-OR
RO-P(OR)-R₁-P(OR)-OR
R-P(R)-OR
et
P(R)₃
dans lesquelles R représente, indépendamment dans chaque cas, un groupe aryle, alkyle, cycloalkyle, aralkyle ou alkaryle portant ou non des substituants et comportant un ou plusieurs atomes de carbone, et R₁ représente un groupe 4,4'-biphénylène, et
d) éventuellement, des charges (par exemple des fibres de verre), des pigments, des colorants, des antioxydants, des agents thermostabilisants, des absorbeurs UV et des agents de démoulage ;
B) extruder cette composition, s'il est nécessaire de bien mélanger les composants par extrusion, à une température de 200 à 330 °C ; et
C) mouler le mélange ainsi obtenu, à une température de 200 à 330 °C.

8. Procédé conforme à la revendication 7, dans lequel la température se situe dans l'intervalle allant de 240 à 315 °C.

9. Procédé conforme à la revendication 7, dans lequel la proportion dudit polytétrafluoroéthylène vaut de 0,1 à 5,0 % en poids.

10. Procédé conforme à la revendication 8 ou 9, dans lequel on utilise le ou les composés organophosphorés en une proportion de 0,01 à 1,0 % en poids.

11. Emploi d'une composition telle que celle qui est définie dans la revendication 1 ou 7, pour fabriquer des articles moulés qui opposent, à la combustion et/ou à l'inflammation, une résistance plus grande que celle d'une composition qui ne contient pas le composant (A) indiqué dans la revendication 1.
